# FASCICULE DE BREVET EUROPEEN

(11) **EP 3 132 404 B1**
(45) Date de publication et mention de la délivrance du brevet: **20.02.2019**
(21) Numéro de dépôt: 15719428.3
(22) Date de dépôt: 17.04.2015
(51) Int. Cl.: G06Q 20/10, G06Q 20/32, G06Q 20/34

(54) **MODULE D'ÉMULATION D'AU MOINS UNE CARTE DE PAIEMENT, PROCÉDÉ, DISPOSITIF DE PAIEMENT, PRODUIT PROGRAMME D'ORDINATEUR ET MEDIUM DE STOCKAGE CORRESPONDANTS**
MODUL ZUR EMULIERUNG VON MINDESTENS EINER BEZAHLKARTE UND ZUGEHÖRIGES VERFAHREN, BEZAHLVORRICHTUNG, COMPUTERPROGRAMMPRODUKT UND SPEICHERMEDIUM
MODULE FOR EMULATING AT LEAST ONE PAYMENT CARD, AND CORRESPONDING METHOD, PAYMENT DEVICE, COMPUTER PROGRAM PRODUCT AND STORAGE MEDIUM

(30) Priorité: 18.04.2014 FR 1453544
(43) Date de publication de la demande: 22.02.2017
(73) Titulaire: Ingenico Group, 75015 Paris (FR)
(72) Inventeur: NACCACHE, David, F-75018 Paris (FR); MAYER, Laurent, F-95800 Courdimanche (FR); EL KOUCHE, Bilal, F-93200 Saint Denis (FR)
(74) Mandataire: Vidon Brevets & Stratégie
(86) Numéro de dépôt international: PCT/EP2015/058375
(87) Numéro de publication internationale: WO 2015/158888

(56) Documents cités:
- EP-A1- 0 936 530
- EP-A1- 2 211 480
- EP-A1- 2 365 469
- US-A1- 2013 339 166
- US-B1- 8 196 131

## Description

### 1 DOMAINE DE L'INVENTION

La présente invention se rapporte au domaine du paiement par carte bancaire et plus particulièrement au paiement par carte bancaire virtuelle.

### 2 SOLUTIONS DE L'ART ANTERIEUR

Il existe un grand nombre de solutions permettant de se passer d'une carte bancaire réelle/physique pour effectuer des paiements, notamment des paiements par Internet, effectués à partir d'un terminal de communication d'un utilisateur (ordinateur, assistant personnel, tablette, smartphone, ...), l'un des enjeux principaux de ces solutions étant la sécurité du paiement.

Ainsi, un grand nombre d'organismes bancaires offrent à leurs clients des solutions permettant de payer en ligne sans utiliser le numéro de carte bancaire physique. Pour ce faire, il suffit en général d'installer sur son terminal un logiciel permettant d'obtenir un numéro valable pour un seul paiement et qui ne peut pas être reconnu par d'éventuels pirates du Web.

L'inconvénient majeur de ces systèmes réside donc dans le fait que le numéro obtenu est temporaire et ne peut être utilisé que pour un paiement. Ces systèmes permettent donc de remplacer une carte bancaire par la génération d'un numéro de carte bancaire par paiement, mais ne permettent pas de remplacer une carte bancaire par une carte virtuelle avec un numéro pouvant être utilisé pour tout paiement.

Il existe d'autres types de solutions qui permettent, dans une unique carte de paiement physique, d'émuler une ou plusieurs cartes bancaires (ainsi que des cartes de fidélité, des cartes prépayées, ...). Pour ce faire, les données représentatives des cartes à émuler sont chargées dans la carte unique, qui s'utilise ensuite comme une carte bancaire classique, et doit donc être présentée pour chaque paiement. L'utilisation de cette carte de paiement unique nécessite un choix par l'utilisateur de la carte bancaire émulée à utiliser pour un paiement donné, et ne permet pas un paiement en ligne (sauf à saisir, par l'utilisateur, le numéro de la carte à utiliser, avec les insécurités qui sont liées à une telle saisie).

Alternativement, les documents de brevet US 2013/339166 et US 8,196,131 B1 proposent des méthodes et des systèmes associés pour gérer des applications de cartes présentes dans un portefeuille électronique embarqué dans un terminal mobile.

Il existe donc un besoin pour une solution permettant d'émuler une carte de paiement physique offrant les garanties de sécurités optimales pour chaque paiement, tout en optimisant l'ergonomie pour l'utilisateur.

### 1 RESUME DE L'INVENTION

L'invention concerne un système de paiement selon la revendication 1.

Ainsi, l'invention propose une solution nouvelle et inventive de l'émulation d'une carte de paiement, dans un terminal de communication (par exemple un ordinateur, un assistant personnel, une tablette, un smartphone ...) permettant de s'affranchir d'une carte de paiement physique pour une pluralité de paiements, tout en bénéficiant des avantages d'utilisation d'une telle carte, à savoir son utilisation pour tout paiement dans les limites classiques d'utilisation d'une telle carte de paiement (date d'expiration, plafond de dépenses ...).

Ainsi, l'invention, selon ses différents modes de réalisation, permet d'émuler une carte de paiement physique, en obtenant (par téléchargement par exemple) les données représentatives de la carte nécessaires à la mise en oeuvre d'une opération de paiement de façon à pouvoir les communiquer, comme si elles étaient lues sur la carte de paiement physique, à un module d'acquisition de paiement les requérant pour une opération de paiement donnée.

Par la suite, cette carte émulée peut être utilisée pour une pluralité d'opérations de paiement, comme une carte de paiement physique classique (toujours dans les limites classiques d'utilisation d'une telle carte de paiement telles que la date d'expiration, un plafond de dépenses ...).

Ainsi, l'ergonomie est nettement optimisée pour un utilisateur, par rapport aux solutions existantes proposées par les organismes bancaires notamment et consistant à générer un numéro de carte bancaire temporaire, pour chaque paiement. En effet, l'utilisateur n'a qu'à choisir la carte émulée qu'il veut utiliser pour un paiement donné, sans saisir de numéro de carte bancaire ...

De plus, le module d'émulation étant intégré dans une enceinte sécurisée du terminal de communication, les garanties de sécurité optimales sont fournies.

En particulier, la ou les données représentatives de la carte, dites données carte, sont les données bancaires classiques nécessaires à la mise en oeuvre d'une opération de paiement, ou transaction bancaire. Par exemple, une carte bancaire se caractérise par un numéro unique, défini par la norme internationale ISO/IEC 7812.

Le dispositif de paiement est par exemple un module intégré également au terminal de communication, dans une enceinte sécurisée, et comprenant un module de communication et un module d'acquisition de paiement. Ce module de communication permet d'une part de communiquer avec un lecteur de carte de paiement (interne ou externe au terminal de communication) de façon à obtenir les données de la carte de paiement nécessaires à une opération de paiement, ou encore de communiquer avec le module d'émulation de carte de paiement selon l'invention. D'autre part, le module de communication permet de communiquer avec le module d'acquisition de paiement, en charge de l'opération de paiement proprement dite, de façon à lui fournir les données carte préalablement obtenues et requises pour la validation de l'opération de paiement.

Selon certains modes de réalisation de l'invention, le module d'administration est un module logiciel permettant de gérer les différentes cartes émulées par le module d'émulation de carte de paiement selon l'invention, c'est-à-dire d'installer/créer de nouvelles cartes émulées et de désinstaller certaines cartes émulées. Par exemple, ce module d'administration émet des requêtes vers le module d'émulation de carte de paiement, pour installer une nouvelle carte émulée et activer ainsi les moyens d'obtention des données de paiement, ou pour désinstaller une carte émulée et par exemple effacer toutes les données de paiement y relatives. Ce module d'administration peut présenter une interface utilisateur permettant l'installation et la désinstallation de cartes émulées, lorsque l'utilisateur du terminal de communication le souhaite.

Selon une caractéristique particulière de l'invention, les moyens d'obtention sont activés à réception, par les moyens de réception, d'une requête d'installation émise par le module d'administration.

Ainsi, selon ce mode de réalisation de l'invention, le module d'administration émet une requête d'installation d'une nouvelle carte émulée à destination du module d'émulation de carte de paiement, via ses moyens de réception. La réception de cette requête d'installation déclenche l'activation des moyens d'obtention de données carte, par exemple sous la forme d'un téléchargement des données de la carte bancaire physique à émuler. Le module d'émulation de carte de paiement est alors apte à fournir une nouvelle carte émulée, à utiliser au choix de l'utilisateur pour une ou plusieurs opérations de paiement.

Selon un aspect particulier de l'invention, le module d'émulation comprend en outre des moyens de stockage de la donnée carte obtenue par les moyens d'obtention.

Ainsi, selon ce mode de réalisation de l'invention, le module d'émulation stocke les données carte préalablement obtenues (par exemple sous la forme d'un téléchargement des données de la carte bancaire physique à émuler), de façon à en disposer à tout moment pour les communiquer au module d'acquisition de paiement.

Selon un mode de réalisation particulier de l'invention, le stockage des données d'une carte émulée est associé à un identifiant permettant ensuite de désinstaller la carte émulée, lorsque cela est requis par le module d'administration.

Selon une caractéristique particulière de l'invention, le module d'émulation comprend des moyens de désinstallation d'au moins une carte émulée, activés à réception, par les moyens de réception, d'une requête de désinstallation de la carte émulée émise par le module d'administration.

Ainsi, selon ce mode de réalisation de l'invention, la réception, par les moyens de réception du module d'émulation de carte de paiement, d'une requête de désinstallation émise par le module d'administration, déclenche l'activation des moyens de désinstallation d'une carte émulée, par exemple sous la forme de l'effacement des données stockées relatives à cette carte émulée à désinstaller.

La requête de désinstallation émise par le module d'administration contient par exemple un identifiant de la carte émulée à désinstaller, sous la forme d'un paramètre de la requête, cet identifiant étant par exemple associé à la carte émulée au moment de sa création, et plus particulièrement au moment du stockage des données de paiement y relatives.

En particulier, les moyens de communication communiquent avec le module de communication du dispositif de paiement selon la norme ISO 7816.

Ainsi, selon ce mode de réalisation de l'invention, les données transmises entre les moyens de communication du module d'émulation et le module de communication du dispositif de paiement transitent via un buffer ISO 7816, comme des données lues à partir d'une carte de paiement physique, via un lecteur de carte. De cette manière, le module d'acquisition de paiement du dispositif de paiement ne peut pas détecter si les données carte proviennent d'un module d'émulation de carte de paiement ou d'une carte de paiement physique. Les mêmes garanties de sécurité sont donc obtenues avec le module d'émulation de carte de paiement, qu'avec un lecteur de carte physique.

Selon un mode de réalisation particulier de l'invention, le module d'émulation est intégré au dispositif de paiement.

Ainsi, selon ce mode de réalisation de l'invention, le module d'émulation de carte de paiement est intégré à un dispositif de paiement, lui-même présent dans un terminal de communication, au sein d'une enceinte sécurisée.

De cette manière, un utilisateur en possession du terminal de communication peut effectuer des paiements sans adjonction de module externe à son terminal de communication, et en utilisant, s'il le souhaite, une même carte de paiement émulée, pour tous ses paiements, en toute sécurité.

En effet, selon les différents modes de réalisation de l'invention, l'utilisateur peut disposer d'une pluralité de cartes de paiement émulées pour effectuer des paiements grâce à un dispositif de paiement intégré à son terminal de communication. En pratique, à partir du moment où sa carte de paiement physique est émulée dans son terminal de communication, l'utilisateur n'a plus besoin de cette carte de paiement physique lorsqu'il souhaite effectuer un paiement via son terminal de communication, ni de saisir un numéro de carte virtuelle temporaire pour chaque paiement. L'utilisateur doit simplement sélectionner la carte de paiement émulée à utiliser pour un paiement donné.

L'invention concerne également un dispositif de paiement comprenant un module d'émulation tel que décrit précédemment.

L'invention concerne également un procédé d'émulation selon la revendication 7.

L'invention concerne enfin un programme d'ordinateur téléchargeable depuis un réseau de communication et/ou stocké sur un support lisible par ordinateur et/ou exécutable par un processeur, comprenant des instructions de code de programme pour l'exécution du procédé tel que décrit précédemment, lorsqu'il est exécuté par un processeur, ainsi qu'un médium de stockage lisible par ordinateur et non transitoire, stockant un programme d'ordinateur comprenant un jeu d'instructions exécutables par un ordinateur ou un processeur pour mettre en oeuvre le procédé tel que décrit précédemment.

### 4 LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un premier exemple de système dans lequel est intégré un module d'émulation de carte de paiement selon un premier mode de réalisation de l'invention ;
- la figure 2 présente un deuxième exemple de système dans lequel est intégré un module d'émulation de carte de paiement selon un deuxième mode de réalisation de l'invention ;
- la figure 3 présente un exemple d'architecture d'un module d'émulation de carte de paiement selon un mode de réalisation de l'invention ;
- la figure 4 présente les principales étapes du procédé d'émulation de carte de paiement, selon un mode de réalisation de l'invention.

### 5 DESCRIPTION DETAILLEE DE L'INVENTION

### 5.1 Principe général

Le principe de l'invention consiste à émuler une carte bancaire réelle d'un utilisateur de façon à permettre à cet utilisateur d'effectuer des opérations de paiement, sans présenter sa carte de paiement réelle. En particulier, l'invention, selon ses différents modes de réalisation, s'applique aux paiements mis en oeuvre par l'intermédiaire d'un terminal de communication d'un utilisateur, tel qu'un ordinateur, un assistant personnel, une tablette, un smartphone ....

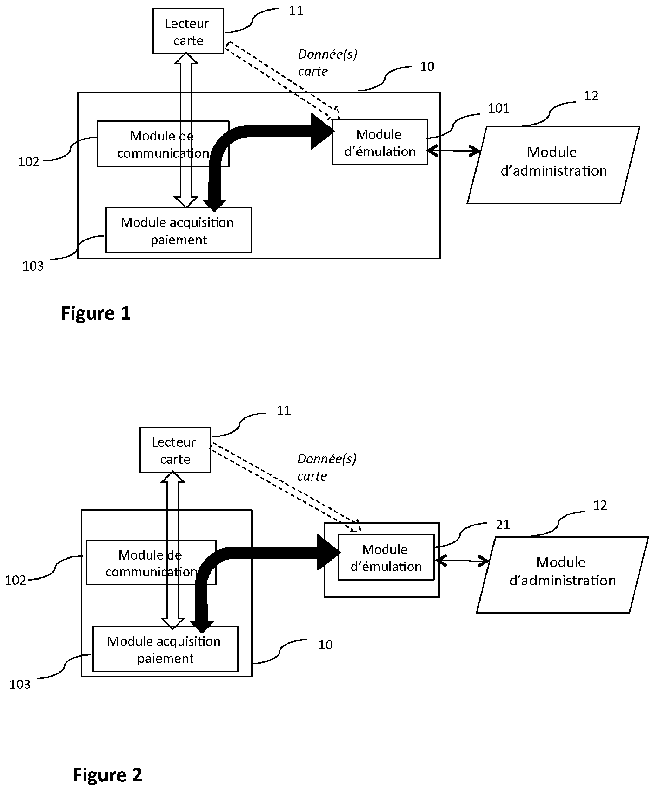

Selon les différents modes de réalisation de l'invention, un tel système permettant la mise en oeuvre d'opérations de paiement (illustré par exemple aux figures 1 et 2) présente un dispositif de paiement 10, par exemple intégré, sous la forme d'un circuit intégré, au terminal de communication de l'utilisateur (non illustré), dans une enceinte sécurisée, et un lecteur de carte de paiement 11.

Le dispositif de paiement 10 peut effectuer des opérations de paiement notamment grâce à la lecture, via le lecteur de carte 11, de données d'une carte de paiement réelle d'un utilisateur. Pour ce faire, le dispositif de paiement 10 dispose notamment d'un module de communication 102 et d'un module d'acquisition de paiement 103. Le module de communication 102 permet notamment de récupérer des données lues de la carte de paiement réelle, afin de les communiquer ensuite au module d'acquisition de paiement 103, pour la réalisation de l'opération de paiement. Le module de communication 102 permet également au dispositif de paiement 10 de communiquer, de manière sécurisée, vers un serveur bancaire, pour réaliser ou finaliser une transaction (communications non illustrées).

Le principe général de l'invention consiste donc à émuler une carte de paiement réelle d'un utilisateur, via un module d'émulation (101, 21) tout en conservant le fonctionnement décrit ci-dessus pour le déroulement d'une opération de paiement. Ainsi, le module de communication 102 et le module d'acquisition 103 du dispositif de paiement 10 ne peuvent pas distinguer une carte réelle d'une carte émulée. De cette manière, les règles de sécurité sont notamment garanties lors de l'utilisation d'une carte émulée, de la même manière que lors de l'utilisation d'une carte de paiement réelle.

On parle ci-après de l'émulation d'une carte de paiement réelle, mais les différents modes de réalisation de l'invention permettent d'émuler une pluralité de cartes de paiement.

### 5.2 Description d'un premier mode de réalisation

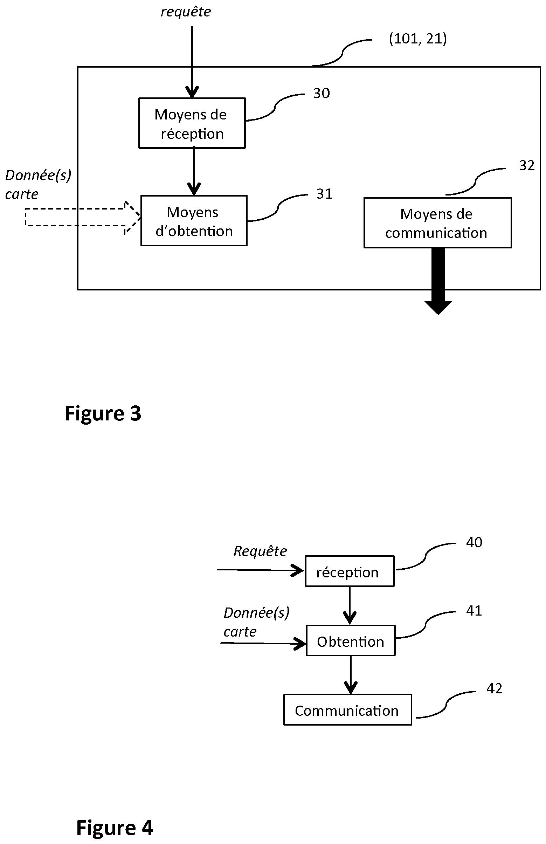

Les figures 1 et 3 illustrent un premier mode de réalisation de l'invention, dans lequel le module d'émulation de carte de paiement 101 est situé au sein d'un dispositif de paiement 10, lui-même intégré dans un terminal de communication, au sein d'une enceinte sécurisée. Ainsi, les composants électroniques formant le module d'émulation de carte de paiement sont intégrés dans le circuit intégré formant le dispositif de paiement, lui-même présent au sein d'une enceinte sécurisée du terminal de communication.

Selon ce premier mode de réalisation de l'invention, on considère par exemple un utilisateur possédant un ordinateur dans lequel est intégré, de manière sécurisée, un dispositif de paiement, lui permettant, via une application logicielle correspondante, d'effectuer des paiements avec sa carte de paiement réelle. Pour ce faire, un lecteur de carte de paiement 11 est également disponible, sous la forme d'un module externe connecté à l'ordinateur ou d'un module interne intégré à l'ordinateur. Ce lecteur de carte de paiement 11 permet notamment de lire les données d'une carte insérée par l'utilisateur, afin d'effectuer l'opération de paiement, à la manière classique d'un terminal de paiement électronique.

Lorsqu'aucune opération de paiement n'est en cours, il est préférable, ainsi que plus pratique pour l'utilisateur, de ne pas laisser la carte de paiement insérée dans le lecteur de carte. En effet, pour des raisons de sécurité, il est préférable que la carte ne soit pas toujours disponible à la lecture. Par ailleurs, l'utilisateur peut avoir besoin de sa carte pour d'autres paiements effectués sans son ordinateur, ou pour retirer de l'argent à un distributeur de billets...

Ce fonctionnement suppose donc d'une part que l'utilisateur ait sa carte de paiement réelle disponible à proximité de son ordinateur lorsqu'il souhaite effectuer un paiement via le dispositif de paiement intégré à son ordinateur et d'autre part qu'il la retire en dehors de ces opérations de paiement.

L'invention, selon ses différents modes de réalisation, permet d'offrir à l'utilisateur une meilleure ergonomie de paiement via le dispositif de paiement intégré à son ordinateur en lui permettant d'utiliser une carte émulée correspondant à sa carte de paiement réelle, pour tous les paiements effectuées via ce dispositif, sans avoir donc à présenter sa carte de paiement réelle, tout en conservant les garanties de sécurité requises pour une opération de paiement.

Pour ce faire, le module d'émulation de carte de paiement 101 permet créer/installer une ou plusieurs cartes émulées, de les utiliser pour une pluralité d'opérations de paiement, via le dispositif de paiement précité, ainsi que de les désinstaller le cas échéant.

L'invention prévoit donc également, selon différents modes de réalisation, que le module d'émulation de carte de paiement 101 puisse être administré, par un module d'administration 12, de façon à gérer l'installation de cartes émulées, ainsi que leur désinstallation.

Ainsi, ce module d'administration 12, par exemple un module logiciel présentant une interface utilisateur permettant à ce dernier de gérer les cartes émulées disponibles dans son ordinateur, émet des requêtes d'installation ou de désinstallation de cartes à destination du module d'émulation 101.

Par exemple, lorsque l'utilisateur souhaite disposer d'une nouvelle carte de paiement émulée dans son ordinateur, il peut, via l'interface utilisateur du module d'administration 12, requérir l'installation de cette nouvelle carte, à partir d'une carte réelle insérée dans le lecteur de carte 11. De même, lorsque l'utilisateur souhaite désinstaller une carte émulée, par exemple parce que la carte réelle correspondante est arrivée à expiration, ou parce qu'il souhaite céder ou prêter son ordinateur, il peut, via l'interface utilisateur du module d'administration 12, requérir la désinstallation d'une carte émulée donnée.

Comme illustré sur la figure 3, le module d'émulation de carte de paiement 101 dispose donc de moyens de réception 30 de requêtes, en provenance du module d'administration 12.

Ainsi, lorsqu'une requête d'installation d'une carte à émuler est reçue par ses moyens de réception 30, les moyens d'obtention 31 sont activés, pour obtenir au moins une donnée représentative de la carte réelle à émuler, notée aussi *Donnée(s) carte.* Une fois les données nécessaires à l'émulation obtenues, la carte de paiement réelle est donc émulée et disponible à l'utilisation, de manière virtuelle, pour toute opération de paiement. L'utilisateur peut alors retirer la carte réelle du lecteur et ne plus s'en servir pour des paiements via son terminal de communication.

Selon un mode de réalisation particulier de l'invention, les données obtenues sont stockées par le module d'émulation 101, via des moyens de stockage (non illustrés), et sont par exemple identifiées par un identifiant unique permettant ensuite de retrouver la carte émulée (notamment lors d'une requête de désinstallation).

Ensuite, lorsqu'une opération de paiement requiert l'utilisation d'une carte de paiement, et que l'utilisateur choisit d'utiliser cette carte émulée, les moyens de communication 32 du module d'émulation 101 communiquent avec le module de communication 102 du dispositif de paiement 10, par exemple pour lui fournir les données carte préalablement obtenues et stockées.

Par exemple, cette communication est mise en oeuvre via un buffer ISO 7816 (principale norme en matière de cartes à puce), de façon à ce que le module de communication 102 du dispositif de paiement 10 ne puisse pas détecter que la carte utilisée pour le paiement est une carte émulée. Les garanties de sécurité sont donc optimales, comme pour l'utilisation d'une carte de paiement réelle.

Côté utilisateur, la mise en oeuvre d'une opération de paiement via une carte émulée est rendue possible par exemple grâce à une interface utilisateur, permettant notamment à ce dernier de choisir la carte émulée à utiliser, une carte par défaut pouvant être prédéfinie (par exemple la carte de paiement principale de l'utilisateur). L'utilisateur peut également avoir à choisir entre une carte réelle insérée dans le lecteur et une ou plusieurs cartes émulées.

L'utilisateur peut donc utiliser une carte émulée, selon les différents modes de réalisation de l'invention, pour autant d'opérations de paiement qu'il le souhaite, en toute sécurité, et sans avoir à fournir sa carte de paiement réelle.

Enfin, lorsqu'une requête de désinstallation émise par le module d'administration 12 est reçue par les moyens de réception 30 du module d'émulation 101, des moyens de désinstallation (non illustrés) du module d'émulation 101 sont activés, de façon par exemple à effacer toutes les données relatives à la carte émulée à désinstaller. Pour ce faire, l'identifiant associé à la carte émulée, au moment de sa création/son installation, peut être transmis dans la requête afin que les moyens de désinstallation sachent quelle carte doit être désinstallée.

### 5.3 Description d'un deuxième mode de réalisation

Les figures 2 et 3 illustrent un deuxième mode de réalisation de l'invention, dans lequel le module d'émulation de carte de paiement 21 est situé au sein d'une enceinte sécurisée d'un terminal de communication, dans lequel un dispositif de paiement 10 est lui-même également intégré (par exemple sous la forme d'un circuit intégré), au sein d'une enceinte sécurisée (distincte ou identique à celle du module d'émulation).

Ainsi, le module d'émulation 21 peut être intégré dans une carte SIM présente dans le terminal de communication, ou dans tout autre endroit sécurisé du terminal de communication.

Toutes les caractéristiques décrites en relation avec le premier mode de réalisation peuvent être reproduites dans ce deuxième mode de réalisation, les communications entre le module d'émulation de carte 21 et le module de communication 102 du dispositif de paiement 10 se faisant de manière sécurisée entre deux enceintes sécurisées d'un même terminal de communication, comme illustré sur la figure 2.

### 5.4 Procédé d'émulation de carte de paiement

La figure 4 illustre quant à elle les principales étapes du procédé d'émulation de carte de paiement permettant de fournir une carte émulée correspondante, selon les différents modes de réalisation de l'invention.

Ce procédé, mis en oeuvre par un module d'émulation de carte de paiement (tel que décrit ci-dessus, selon les différents modes de réalisation de l'invention) intégré au sein d'une enceinte sécurisée d'un terminal de communication, comprend une première étape 40 de réception d'au moins une requête en provenance d'au moins un module d'administration installé dans le terminal de communication.

Cette requête peut être une requête d'installation d'une carte émulée correspondant à la carte de paiement réelle, et est suivie par une étape d'obtention 41 d'au moins une donnée représentative de la carte de paiement réelle, dite donnée carte.

Si la requête est une requête de désinstallation d'une carte émulée, elle est alors suivie d'une étape de désinstallation (non illustrée), effaçant par exemple toutes les données relatives à la carte émulée à désinstaller.

Ensuite, lors d'une opération de paiement impliquant la carte émulée et requérant au moins la donnée carte préalablement obtenue, une étape de communication 42 est mise en oeuvre, avec au moins un module d'acquisition de paiement d'un dispositif de paiement, via au moins un module de communication de ce dispositif de paiement. Par exemple, et comme illustré en figures 1 et 2, le dispositif de paiement est lui-même intégré dans le terminal de communication, dans une enceinte sécurisée, et permet à l'utilisateur de procéder à des opérations de paiements via son terminal de communication.

Comme déjà indiqué, selon des variantes de réalisation, le module d'émulation de carte de paiement mettant en oeuvre les étapes du procédé d'émulation peut être intégré au dispositif de paiement, ou dans la même enceinte sécurisée, ou se situer dans une autre enceinte sécurisée du terminal de communication.

Selon les différents modes de réalisation de l'invention, la carte émulée est apte à être impliquée dans une pluralité d'opérations de paiement successives.

## Revendications

1. Système de paiement comprenant un module d'émulation (101, 21) d'au moins une carte de paiement, fournissant une carte émulée correspondante, un terminal de communication et un lecteur de carte de paiement connecté ou intégré audit terminal de communication, ledit module d'émulation étant intégré au sein d'une enceinte sécurisée dudit terminal de communication et ledit système comprenant :
• des moyens de réception (30), par ledit module d'émulation, d'au moins une requête en provenance d'au moins un module d'administration (12) installé dans ledit terminal de communication ;
• des moyens d'obtention (31), par ledit module d'émulation, d'une donnée carte, via au moins un module de communication (102) d'un dispositif de paiement (10);
• des moyens de communication (32) dudit module d'émulation avec au moins un module d'acquisition de paiement (103) dudit dispositif de paiement (10), via au moins ledit module de communication (102) dudit dispositif de paiement (10), lesdits moyens de communication (32) étant activés lors d'une opération de paiement impliquant ladite carte émulée et requérant au moins ladite donnée carte obtenue,
ladite carte émulée étant apte à être impliquée dans une pluralité d'opérations de paiement successives,
**caractérisé en ce que** ladite donnée carte est au moins une donnée représentative de ladite carte de paiement lue par des moyens de lecture dudit lecteur de carte de paiement.

2. Système de paiement selon la revendication 1, **caractérisé en ce que** lesdits moyens d'obtention sont activés à réception, par lesdits moyens de réception, d'une requête d'installation émise par ledit module d'administration.

3. Système de paiement selon la revendication 1, **caractérisé en ce qu'**il comprend en outre des moyens de stockage d'au moins ladite donnée carte obtenue par lesdits moyens d'obtention.

4. Système de paiement selon la revendication 1, **caractérisé en ce que** ledit module d'émulation comprend des moyens de désinstallation d'au moins une carte émulée, activés à réception, par lesdits moyens de réception, d'une requête de désinstallation de ladite carte émulée émise par ledit module d'administration.

5. Système de paiement selon la revendication 1, **caractérisé en ce que** lesdits moyens de communication communiquent avec ledit module de communication dudit dispositif de paiement selon la norme ISO 7816.

6. Système de paiement selon la revendication 1, **caractérisé en ce que** ledit module d'émulation est intégré audit dispositif de paiement.

7. Procédé d'émulation d'au moins une carte de paiement, fournissant une carte émulée correspondante, ledit procédé étant mis en oeuvre par un module d'émulation de carte de paiement intégré au sein d'une enceinte sécurisée d'un terminal de communication d'un système de paiement selon l'une quelconque des revendications 1 à 6, et comprenant :
• une étape de réception (40), par ledit module d'émulation, d'au moins une requête en provenance d'au moins un module d'administration installé dans ledit terminal de communication ;
• une étape d'obtention (41), par ledit module d'émulation, d'une donnée carte, via au moins un module de communication d'un dispositif de paiement ;
• lors d'une opération de paiement impliquant ladite carte émulée et requérant au moins ladite donnée carte obtenue, une étape de communication (42) entre ledit module d'émulation et au moins un module d'acquisition de paiement dudit dispositif de paiement, via au moins ledit module de communication dudit dispositif de paiement,
ladite carte émulée étant apte à être impliquée dans une pluralité d'opérations de paiement successives,
**caractérisé en ce que** ladite donnée carte est au moins une donnée représentative de ladite carte de paiement lue lors d'une étape de lecture par ledit lecteur de carte de paiement.

8. Programme d'ordinateur téléchargeable depuis un réseau de communication et/ou stocké sur un support lisible par ordinateur et/ou exécutable par un processeur, comprenant des instructions de code de programme pour l'exécution du procédé selon la revendication 7, lorsqu'il est exécuté par un processeur.

9. Médium de stockage lisible par ordinateur et non transitoire, stockant un programme d'ordinateur comprenant un jeu d'instructions exécutables par un ordinateur ou un processeur pour mettre en oeuvre le procédé selon la revendication 7.

## Patentansprüche

1. Zahlungssystem, umfassend ein Emulationsmodul (101, 21) mindestens einer Zahlkarte, das eine entsprechende emulierte Karte liefert, ein Kommunikationsendgerät und einen Zahlkartenleser, der an das Kommunikationsendgerät angeschlossen oder in dieses integriert ist, wobei das Emulationsmodul in einen gesicherten Raum des Kommunikationsendgeräts integriert ist, und wobei das System umfasst:
- Mittel zum Empfang (30), durch das Emulationsmodul, mindestens einer Anfrage von mindestens einem Verwaltungsmodul (12), das in dem Kommunikationsendgerät installiert ist;
- Mittel zum Erhalt (31), durch das Emulationsmodul, eines Kartendatums über mindestens ein Kommunikationsmodul (102) einer Zahlungsvorrichtung (10);
- Mittel zur Kommunikation (32) des Emulationsmoduls mit mindestens einem Zahlungserfassungsmodul (103) der Zahlungsvorrichtung (10) über mindestens das Kommunikationsmodul (102) der Zahlungsvorrichtung (10), wobei die Kommunikationsmittel (32) während eines Zahlungsvorgangs, der die emulierte Karte einbindet und mindestens das erhaltene Kartendatum anfordert, aktiviert werden,
wobei die emulierte Karte geeignet ist, in eine Vielzahl von aufeinanderfolgenden Zahlungsvorgängen eingebunden zu sein,
**dadurch gekennzeichnet, dass** das Kartendatum mindestens ein für die Zahlungskarte repräsentatives Datum ist, das von Lesemitteln des Zahlungskartenlesers gelesen wird.

2. Zahlungssystem nach Anspruch 1, **dadurch gekennzeichnet, dass** die Mittel zum Erhalt beim Empfang einer Installationsanfrage, die von dem Verwaltungsmodul gesandt wird, durch die Empfangsmittel aktiviert werden.

3. Zahlungssystem nach Anspruch 1, **dadurch gekennzeichnet, dass** es ferner Mittel zum Speichern des mindestens einen Kartendatums, das von den Mittel zum Erhalt erhalten wird, umfasst.

4. Zahlungssystem nach Anspruch 1, **dadurch gekennzeichnet, dass** das Emulationsmodul Mittel zur Deinstallation mindestens einer emulierten Karte umfasst, die bei Empfang, durch die Empfangsmittel, einer Anfrage nach Deinstallation der emulierten Karte, die von dem Verwaltungsmodul gesandt wird, aktiviert werden.

5. Zahlungssystem nach Anspruch 1, **dadurch gekennzeichnet, dass** die Kommunikationsmittel mit dem Kommunikationsmodul der Zahlungsvorrichtung nach der Norm ISO 7816 kommunizieren.

6. Zahlungssystem nach Anspruch 1, **dadurch gekennzeichnet, dass** das Emulationssystem in die Zahlungsvorrichtung integriert ist.

7. Verfahren zur Emulation mindestens einer Zahlkarte, das eine entsprechende emulierte Karte liefert, wobei das Verfahren durch ein Emulationsmodul einer Zahlkarte eingesetzt wird, das in einen gesicherten Raum eines Kommunikationsendgeräts eines Zahlungssystems nach einem der Ansprüche 1 bis 6 integriert ist, umfassend:
- einen Schritt des Empfangs (40), durch das Emulationsmodul, mindestens einer Anfrage von mindestens einem Verwaltungsmodul, das in dem Kommunikationsendgerät installiert ist;
- einen Schritt des Erhalts (41), durch das Emulationsmodul, eines Kartendatums über mindestens ein Kommunikationsmodul einer Zahlungsvorrichtung;
- bei einem Zahlungsvorgang, der die emulierte Karte einbindet und mindestens das erhaltene Kartendatum anfordert, einen Schritt der Kommunikation (42) zwischen dem Emulationsmodul und mindestens einem Zahlungserfassungsmodul der Zahlungsvorrichtung über mindestens das Kommunikationsmodul der Zahlungsvorrichtung,
wobei die emulierte Karte geeignet ist, in eine Vielzahl von aufeinanderfolgenden Zahlungsvorgängen eingebunden zu sein,
**dadurch gekennzeichnet, dass** das Kartendatum mindestens ein für die Zahlungskarte repräsentatives Datum ist, das bei einem Leseschritt vom Zahlungskartenleser gelesen wird.

8. Computerprogramm, das von einem Kommunikationsnetz heruntergeladen werden kann und/oder auf einem von einem Computer lesbaren Träger gespeichert ist und/oder von einem Prozessor ausgeführt werden kann, umfassend Programmcodeanweisungen für die Ausführung des Verfahrens nach Anspruch 7, wenn es von einem Prozessor ausgeführt wird.

9. Speichermedium, das von einem Computer lesbar und nicht flüchtig ist, das ein Computerprogramm speichert, umfassend einen Satz von Anweisungen, die von einem Computer oder Prozessor für den Einsatz des Verfahrens nach Anspruch 7 ausführbar sind.

## Claims

1. System of payment comprising a module (101, 21) for emulating at least one payment card, providing a corresponding emulated card, a communications terminal and a payment card reader connected with or integrated into said communications terminal, said emulation module being integrated into a secured enclosure of said communications terminal and said system comprising:
• means (30) for receiving, by said emulation module, at least one request coming from at least one administration module (12) installed in said communications terminal;
• means (31) for obtaining, by said emulation module, a card data, via at least one communications module (102) of a payment device (10);
• means (32) for communicating of said emulation module with at least one payment-acquisition module (103) of said payment device (10), via at least one communications module (102) of said payment device (10), said means for communicating being activated during a payment operation involving said emulated card and requiring at least said card data obtained,
said emulated card being capable of being involved in a plurality of successive payment operations
**characterized in that** said card data is at least one piece of data representing the payment card read by means for reading of said payment card reader.

2. System of payment module according to claim 1, **characterized in that** said means for obtaining are activated when said means for receiving receive an installation request sent out by said administration module.

3. System of payment system according to claim 1, **characterized in that** it furthermore comprises means for storing at least said card data obtained by the means for obtaining.

4. System of payment according to claim 1, **characterized in that** said emulation module comprises means for de-installing at least one emulated card, activated at the reception, by said means for receiving, of a request for de-installing said emulated card sent out by said administration module.

5. System of payment according to claim 1, **characterized in that** said means for communicating communicate with said communications module of said payment device according to the ISO 7816 standard.

6. System of payment module according to claim 1, **characterized in that** said emulation module is integrated into said payment device.

7. Method for emulating at least one payment card, providing a corresponding emulated card, said method being implemented by a payment card emulation module integrated into a secured enclosure of a communications terminal of a system of payment according to any one of the claims 1 to 6, and comprising:
• a step for receiving (40), by said emulation module, of at least one request coming from at least one administration module installed in said communications terminal;
• a step for obtaining (41), by said emulation module, a card data, via at least one communications module of a payment device;
• during a payment operation involving said emulated card and requiring at least said obtained card data, a step for communicating (42) between said emulation module and at least one payment-acquisition module of said payment device via at least said communications module of said payment device,
said emulated card being capable of being involved in a plurality of successive payment operations,
**characterized in that** said card data is at least one piece of data representing said payment card read during a step for reading by said payment card reader.

8. Computer program downloadable from a communications network and/or stored in a computer-readable carrier and/or executable by a processor, comprising program code instructions for executing the method according to claim 7, when it is executed by a processor.

9. Computer-readable and non-transient storage medium storing a computer program comprising a set of instructions executable by a computer or a processor to implement the method according to claim 7.
